# EUROPEAN PATENT SPECIFICATION

(11) **EP 4 647 704 B1**
(45) Date of publication and mention of the grant of the patent: **15.07.2026**
(21) Application number: 24218701.1
(22) Date of filing: 10.12.2024
(51) Int. Cl.: F28F 1/02, F28F 9/26, H01M 10/613, H01M 10/617, H01M 10/625, H01M 10/6557, H01M 10/6556, H01M 10/647, H01M 10/6555, H01M 50/209

(54) **COOLING COMPONENT AND BATTERY PACK**
KÜHLKOMPONENTE UND BATTERIEPACK
COMPOSANT DE REFROIDISSEMENT ET BLOC-BATTERIE

(30) Priority: 10.05.2024 CN 202421011902 U; 26.09.2024 WO PCT/CN2024/121389
(43) Date of publication of application: 12.11.2025
(73) Proprietor: Eve Energy Co., Ltd., Huizhou, Guangdong 516006 (CN)
(72) Inventor: LIAO, Lei, Huizhou, Guangdong, 516006 (CN); CHEN, Shanda, Huizhou, Guangdong, 516006 (CN); ZHOU, Hongquan, Huizhou, Guangdong, 516006 (CN); HUANG, Xiaobin, Huizhou, Guangdong, 516006 (CN)
(74) Representative: Berggren Oy

(56) References cited:
- DE-U1- 202013 103 707
- US-A1- 2021 020 896
- US-A1- 2024 107 703

## Description

### TECHNICAL FIELD

The present application relates to a technical field of batteries, and in particular, to a cooling component and a battery pack.

### BACKGROUND

In a related art, a cooling plate for dissipating heat for battery cells is usually placed at bottoms of the battery cells. Heat at the bottom of the battery cell is brought out by a cooling medium, thereby achieving a heat dissipation effect.

However, in this structure, the cooling plate can only dissipate heat from the bottom of the battery cell, and its heat dissipation effect is average. However, the battery cells are tending to develop in a field of fast charging where charging power is gradually increasing. The above structure is difficult to meet the heat dissipation needs required for fast charging of battery cells in a future market. A cooling component for cooling battery cells according to the preamble of claim 1 is disclosed in US 2021/020896 A1.

### SUMMARY

For this purpose, embodiments of the present application provide a cooling component and a battery pack, which can solve the problem of overheating of battery cells.

In a first aspect, embodiments of the present application provide a cooling component. The cooling component includes: a cooling bottom plate for supporting bottoms of the battery cells; and a cooling side plate bendingly connected to one side of the cooling bottom plate; wherein the cooling side plate abuts on and is thermally conductively connected to one side of the whole of the battery cells; wherein the cooling side plate includes a flow channel part and a buffered part, the flow channel part is provided with one or more cooling flow channels, each cooling flow channel is used to circulate cooling medium, the buffered part is provided with a buffer cavity, and the buffer cavity extends along a length direction of the cooling side plate.

In a second aspect, embodiments of the present application provide a battery pack. The battery pack includes: a plurality of battery cells as described above and a plurality of cooling components as described above.

Beneficial effects: the present application provides a cooling component and a battery pack, the cooling component includes a cooling bottom plate for supporting a bottom of the battery cells and a cooling side plate bendingly connected to one side of the cooling bottom plate; wherein the cooling side plate abuts on and is thermally conductively connected to one side of the battery cells. The cooling side plate includes a flow channel part and a buffered part, and the flow channel part is provided with one or more cooling flow channels. Cooling medium is flowed through at least one of the cooling flow channels arranged in the flow channel part to dissipate heat for a side surface of the battery cell. At the same time, the buffer cavity arranged in the buffered part provides a buffer for the battery cell when the battery cell is heated and expanded, so as to prevent obvious deformation of a battery cell structure, and the cooling component can not only dissipate heat for the battery cell, but also provide a buffer for battery cell expansion, so as to ensure the stability of the battery cell structure.

The battery pack provided by the present application can realize multi-faceted heat dissipation of a plurality of battery cells through a plurality of cooling components, and at the same time provide a buffer for expansion of the battery cells through a buffer cavity on the cooling side plate to ensure the stability of the battery cell structure.

### BRIEF DESCRIPTION OF THE DRAWINGS

FIG. 1 is a schematic structural diagram of a cooling component provided by an embodiment of the present application.
FIG. 2 is an enlarged schematic diagram of portion A in FIG. 1.
FIG. 3 is a schematic structural diagram of a current collector according to an embodiment of the present application.
FIG. 4 is a schematic configuration diagram in which the current collector in FIG. 3 is attached to the flow channel part.
FIG. 5 is an enlarged schematic diagram of part B of FIG. 4.
FIG. 6 is a schematic structural diagram of a battery pack provided by an embodiment of the present application.
FIG. 7 is an explosion diagram of FIG. 6.
FIG. 8 is a schematic structural diagram of a plurality of battery cells and a plurality of cooling components in FIG. 5.
FIG. 9 is a schematic structural diagram of two adjacent battery cells in FIG. 8.
FIG. 10 is a schematic structural diagram of portion C of FIG. 9.

Description of reference numbers: 1000. cooling component; 1100. cooling bottom plate; 1200. cooling side plate; 1300. current collector; 1500. fixing component; 1310. current collecting cavity; 1111. cooling flow channel; 1112. buffer cavity; 2000. battery pack; 2100. pipeline component; 2200. cooling plate; 2300. fixing component; 2400. heat insulating subassembly; 2500. battery cell.

### DETAILED DESCRIPTION

The technical solutions in the embodiments of the present application will be clearly and completely described below with reference to the accompanying drawings in the embodiments of the present application. Obviously, the described embodiments are only some of the embodiments of the present application, rather than all of the embodiments. Based on the embodiments in the present application, all other embodiments obtained by those skilled in the art without making creative efforts fall within the scope of protection of this application. Furthermore, it is to be understood that the detailed description described herein is for illustration and explanation of the present application only, and is not intended to limit the present application. In the present application, unless stated to the contrary, the location words used such as "upper" and "lower" usually refer to the upper and lower in the actual use or working state of the device, specifically the drawing direction in the accompanying drawings; and, unless stated to the contrary, the location words used such as "upper" and "lower" generally refer to the upper and lower directions in the actual use or working state of the device, specifically, the drawing directions in the accompanying drawings. While "inner" and "outer" are for the outline of the device.

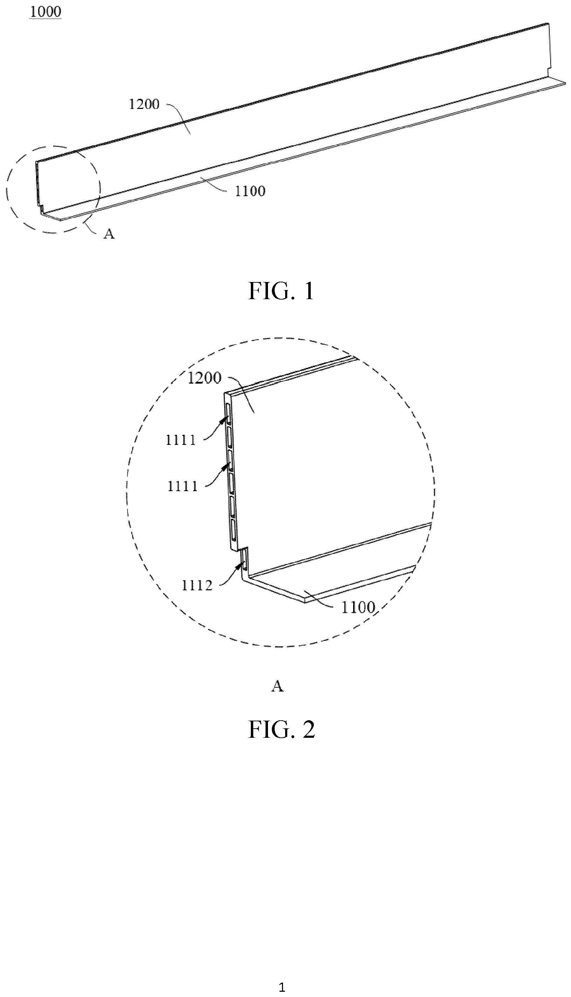

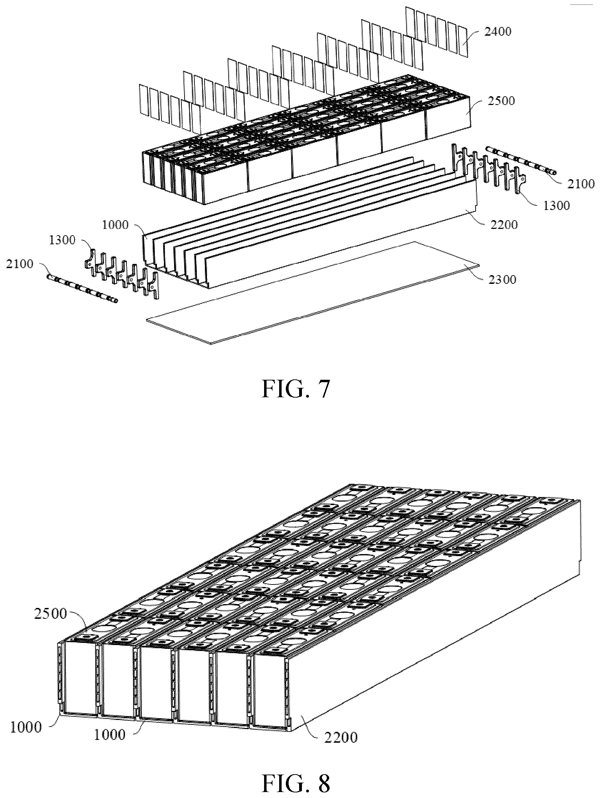

Embodiments of the present application provide a cooling component 1000. Please refer to FIG. 1 and FIG. 2, FIG. 1 is a schematic structural diagram of a cooling component 1000 provided by an embodiment of the present application, and FIG. 2 is a schematic structural diagram of a portion A in FIG. 1. The cooling component 1000 includes a cooling bottom plate 1100 and a cooling side plate 1200. The cooling bottom plate 1100 is for supporting bottoms of the battery cells 2500(in FIG. 7). The cooling side plate 1200 is bendingly connected to one side of the whole of the cooling bottom plate 1100. The cooling side plate 1200 abuts on and is thermally conductively connected to one side of the battery cells 2500 to absorb heat generated by the battery cells 2500. The cooling side plate 1200 includes a flow channel part and a buffered part. The flow channel part is provided with one or more cooling flow channels 1111, each of the cooling flow channels 1111 is used to circulate cooling medium to dissipate heat from the battery cells 2500. The buffered part is provided with a buffer cavity 1112, and the buffer cavity 1112 extends along a length direction of the cooling side plate 1200. The buffer cavity 1112 serves to provide buffer for the battery cells 2500 when the battery cells 2500 expands.

Specifically, since the cooling side plate 1200 is thermally connected to one side of the battery cells 2500, after the cooling medium enters from one end of the cooling flow channels 1111, the cooling medium flowing through the cooling flow channels 1111 can absorb a part of the heat on one side of the battery cells 2500 and then flow out from the other end of the cooling flow channels 1111 to achieve the effect of heat dissipation for the battery cells 2500. When the battery cells 2500 expand, the side of the battery cells 2500 close to the cooling side plate 1200 squeezes the cooling side plate 1200 due to the presence of the buffer cavity 1112 in the buffered part, and the buffer cavity 1112 deforms to the hollowed out to absorb the expansion force generated by the battery cells 2500.

In the present embodiment, the cooling side plate 1200 provided with the flow channel part and a buffered part can not only dissipate heat of the battery cells 2500, but also provide a buffer for the expansion of the battery cells 2500 to ensure the structural stability of the battery cells 2500. It should be noted that in the present embodiment, the structures of the cooling flow channels 1111 and the buffer cavity 1112 extend from one end of the cooling side plate 1200 to the other end of the cooling side plate 1200 in the longitudinal direction of the cooling side plate 1200, and an orthographic projection of the cooling flow channels 1111 and the buffer cavity 1112 on the cooling side plate 1200 is a rectangular structure, but it does not mean that the structure of the cooling flow channels 1111 and/or the buffer cavity 1112 is limited, and in some embodiments, the structure of the cooling flow channel 1111 and/or the buffer cavity 1112 may be other shapes, for example, the orthographic projection of the structure of the cooling flow channels 1111 and/or the buffer cavity 1112 on one side of the cooling side plate 1200 may be Z-shaped, S-shaped, etc.

In some embodiments of the present application, referring to FIG. 2. The buffer cavity 1112 is located on one side of the plurality of the cooling flow channels 1111, and a distance between two adjacent cooling flow channels 1111 is less than the distance between the buffer cavity 1112 and the cooling flow channels 1111 close to the buffer cavity 1112.

Specifically, it is often necessary to cooperate with current collecting devices on both sides of the cooling flow channels 1111, so that the cooling medium is diverted to each cooling flow channels 1111 by the current collecting device at the cooling medium input port of the cooling flow channels 1111 to dissipate heat for the battery cells 2500, and the cooling medium output from each cooling flow channels 1111 is converged by the current collecting device at the cooling medium output port of the cooling flow channels 1111, and discharged to a designated position.

In the present embodiment, the buffer cavity 1112 is provided on one side of the plurality of cooling flow channels 1111, so that the design of the current collecting device only needs to consider the size of each of the cooling flow channels 1111 and the interval between them, and the structure of the current collecting device designed by the present embodiment is relatively simple. However, when the buffer cavity 1112 is provided between two adjacent cooling flow channels 1111, it is necessary to consider how to avoid the cooling medium flowing into the buffer cavity 1112 and the like when designing the current collecting device, so the structure of the designed current collecting device is complicated.

Since the current collecting device and the cooling medium input port and the cooling medium output port of the cooling flow channels 1111 need to meet the sealing conditions to ensure that the cooling medium is isolated from the buffer cavity 1112 and other components. In this embodiment, the distance between the buffer cavity 1112 and the cooling channels 1111 close to the buffer cavity 1112 is smaller than the distance between the buffer cavity 1112 and the cooling channels 1111 close to the buffer cavity 1112. that is, the distance between the buffer cavity 1112 and the cooling channels 1111 close to the buffer cavity 1112 is larger, and the distance between the two adjacent cooling channels 1111 is smaller. The reason why the distance between two adjacent cooling flow channels 1111 is limited to be small is that the number of cooling flow channels 1111 that can be provided can be larger when the height of the flow channel portion is constant, so as to enhance the ability of the cooling component 1000 to dissipate heat for the battery cells 2500.

In some embodiments, the size of the buffer cavity 1112 is the same as the size of each of the cooling flow channels 1111. Specifically, the buffer cavity 1112 and each of the cooling flow channels 1111 have the same width in the thickness direction of the cooling side plate 1200 and have the same height in a height direction of the cooling side plate 1200. In this embodiment, the size of the buffer cavity 1112 is limited to be the same as the size of each of the cooling flow channels 1111, so that a production process of the cooling side plate 1200 is relatively simple, and it is not necessary to design and produce the buffer cavity 1112 and the cooling flow channel 1111 separately due to the difference in the above-described data between the two, so as to increase the production time. In addition, the height and width of the buffer cavity 1112 and the cooling flow passage 1111 are equal to each other, and it is also possible to ensure that the expansion force of the battery cells 2500 to the cooling side plate 1200 is distributed more uniformly when the battery cells 2500 is expanded, thereby enhancing the pressure resistance of the cooling side plate 1200.

In some embodiments, the thickness of the cooling side plate 1200 ranges from 3 mm to 8 mm, a width of the cooling flow channel 1111 ranges from 1.5 mm to 7 mm, and a width of the buffer cavity 1112 ranges from 1.5 mm to 7 mm.

Under the condition that the height of the cooling flow channel 1111 is constant, in order to ensure the amount of cooling medium flowing through the cooling flow channel 1111 per unit time and consider the strength of the cooling side plate 1200. It can be obtained from the experimental data that the width of the cooling flow channel 1111 is designed to be from 1.5 mm to 7 mm, within this width range, the amount of the cooling medium flowing through the cooling flow channels 1111 per unit time has met the heat dissipation requirements of the battery cells 2500, and the thickness of the cooling side plate 1200 is designed to be from 3 mm to 8 mm, and the strength of the cooling side plate 1200 is also satisfied, and the space occupied by the cooling side plate 1200 is also small, and the width of the buffer cavity 1112 is also designed to be equal to the width of the cooling flow channel 1111, and the width of the buffer cavity 1112 is also designed to be from 1.5 mm to 7 mm.

In some embodiments, the thickness of the cooling bottom plate 1100 is less than or equal to the thickness of the cooling side plate 1200, and the thickness of the cooling bottom plate 1100 ranges from 2 mm to 8 mm.

According to the experimental data, the thickness of the cooling bottom plate 1100 is designed to be from 2 mm to 8 mm. At this time, the strength of the cooling bottom plate 1100 is sufficient to support a plurality of the battery cells 2500, and the space occupied by the cooling bottom plate 1100 is also small.

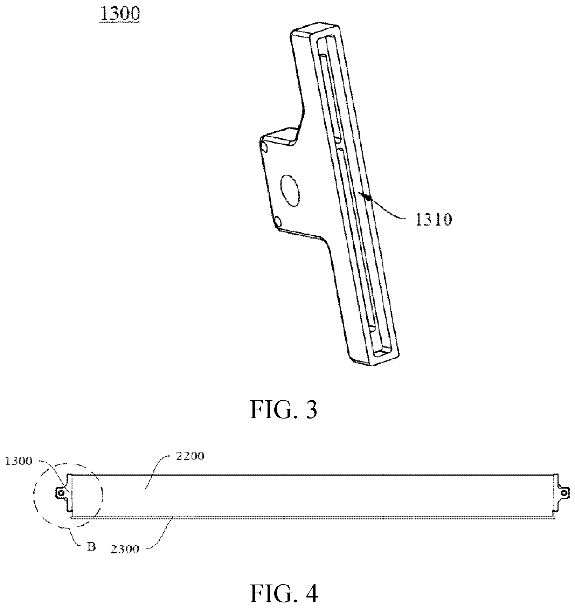

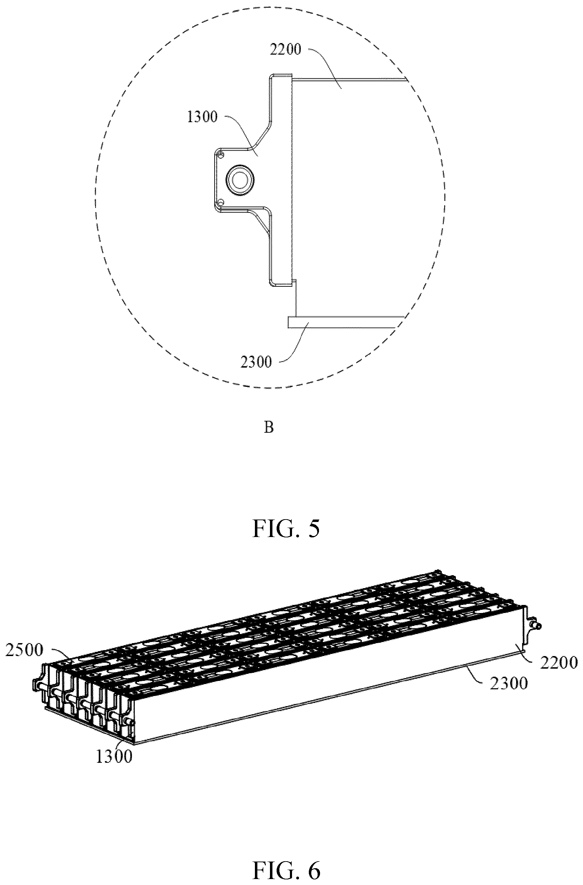

In some embodiments, please refer to FIG. 3, FIG. 4, and FIG. 5, in which FIG. 4 is a schematic structural diagram of the current collector 1300 and the flow channel part in FIG. 3, FIG. 4 is a schematic structural diagram of the current collector 1300 fixed to the flow channel part in FIG. 3, and FIG. 5 is a schematic structural diagram of the B portion in FIG. 4. The cooling component 1000 further includes two current collectors 1300, the two current collectors 1300 are installed on two ends of the flow channel part, and so that a current collecting cavity 1310 of each of the current collecting parts connected to the plurality of the cooling flow channels 1111. The two ends of the flow channel part extend beyond both ends of the buffered part in the length direction of the cooling side plate 1200.

In this embodiment, both ends of the flow channel part are limited to exceed both ends of the buffered part to ensure that a height difference is formed between the flow channel part and the buffered part, so that the current collectors 1300 can be clamped to both ends of the flow channel part and remain fixed, so as to satisfy the stability when the current collecting cavity 1310 of each of the current collectors 1300 connected to the plurality of the cooling flow channels 1111 and transmits the cooling medium.

The present application provides a cooling component1000, the cooling component includes a cooling bottom plate for supporting a bottom of the battery cells and a cooling side plate bendingly connected to one side of the cooling bottom plate; wherein the cooling side plate abuts on and is thermally conductively connected to one side of the battery cells. The cooling side plate includes a flow channel part and a buffered part, and the flow channel part is provided with one or more cooling flow channels. Cooling medium is flowed through at least one of the cooling flow channels arranged in the flow channel part to dissipate heat for a side surface of the battery cell. At the same time, the buffer cavity arranged in the buffered part provides a buffer for the battery cell when the battery cell is heated and expanded, so as to prevent obvious deformation of a battery cell structure, and the cooling component can not only dissipate heat for the battery cell, but also provide a buffer for battery cell expansion, so as to ensure the stability of the battery cell structure.

The present application further provides a battery pack 2000, please refer to FIG. 6 and FIG. 7, FIG. 6 is a schematic structural diagram of a battery pack provided by an embodiment of the present application. FIG. 7 is an explosion diagram of FIG. 6. The battery pack 2000 includes a plurality of battery cells 2500 as described above and a plurality of cooling components 1000 as described above. Specifically, each cooling side plates 1200 is provided with a plurality of the battery cells 2500 disposed at intervals in the longitudinal direction of the cooling bottom plate 1100. A plurality of the cooling members 1000 in the battery pack 2000 are disposed at intervals in the thickness direction of the battery cells 2500.

In some embodiments, please refer to FIG. 8, FIG. 8 is a schematic structural diagram of a plurality of battery cells and a plurality of cooling components in FIG. 5. The plurality of the cooling components 1000 are disposed adjacent to each other, and one of the plurality of the battery cells 2500 is thermally conductively connected to the cooling bottom plate 1100 and the cooling side plate 1200 of the corresponding cooling component 1000, and is thermally conductively connected to the cooling side plate 1200 of another cooling component 1000adjacent to the battery cells 2500. Specifically, the battery cells 2500 placed on the same cooling bottom plate 1100 form a battery cell group. Among the battery cell groups in the battery pack 2000 along the thickness direction of the cooling side plate 1200, except for the battery cell groups located on both sides of the battery pack 2000, one side of the other battery cell groups is thermally connected to the cooling side plate 1200 of the corresponding cooling components 1000,except for the battery cells located on both sides, one side of the remaining battery cells is thermally connected to the cooling side plate 1200 of the corresponding cooling components 1000, and the other side thereof is thermally connected to the other cooling side plate 1200 adjacent thereto, thereby realizing the multi-faceted heat dissipation of the battery cells 2500 and making the heat dissipation effect of the battery pack 2000 better.

In some embodiments, please refer to FIG. 6 and FIG. 7. The battery pack 2000 further includes a plurality of pipeline components 2100 for transmitting the cooling medium. Each of the plurality of the pipeline components 2100 is connected to a plurality of the cooling flow channels 1111 corresponding to the flow collector through one of the current collectors 1300 of the plurality of the cooling components 1000. In this embodiment, the cooling medium is transmitted through a pipe member communicated with each current collector 1300, which facilitates unified management and control of the cooling medium.

In some embodiments, please refer to FIGS. 4 to 8. The battery pack further comprising a plurality of cooling plates, wherein each of the plurality of cooling plates is thermally conductively connected to a corresponding one of the plurality of the battery cells and is located on a side of the battery cell away from the cooling side plate of a corresponding one of the plurality of the cooling components. Because the structure of the cooling component 1000 is that one side of the cooling bottom plate 1100 is connected to the cooling side plate 1200, and the other side is not connected to the cooling side plate 1200, and because the cooling bottom plate 1100 is arranged at intervals in the thickness direction of the cooling bottom plate 1100, this structure and placement mode of the cooling member 1000 will cause one side of one of the battery core groups located on both sides of the plurality of battery cell groups to dissipate heat through the corresponding cooling side plate 1200, and the other side of the battery core group does not exist adjacent to the cooling side plate 1200 to dissipate heat for the other side of the battery core group, therefore, in this implementation, a separate cooling plate 2200 and a corresponding current collector 1300 are arranged on the other side of the battery cell group for dissipating heat on the other side of the battery cell groups.

In some embodiments, referring to FIG. 2, the buffer cavity 1112 is located on a side of the plurality of the cooling flow channels 1111 close to the cooling bottom plate 1100.

Specifically, the battery pack 2000 further includes a fixing component 2300 located at the bottom of the plurality of the cooling components 1000 for fixing the plurality of the cooling components 1000. Both ends of the fixing component 2300 in the longitudinal direction of the cooling bottom plate 1100 exceed both ends in the longitudinal direction of the cooling bottom plate 1100, so that the buffer cavity 1112 is provided on the side of the plurality of the cooling flow channels 1111 close to the cooling bottom plate 1100, so that the current collector 1300 has sufficient space for snapping and fixing both ends of the flow channel part.

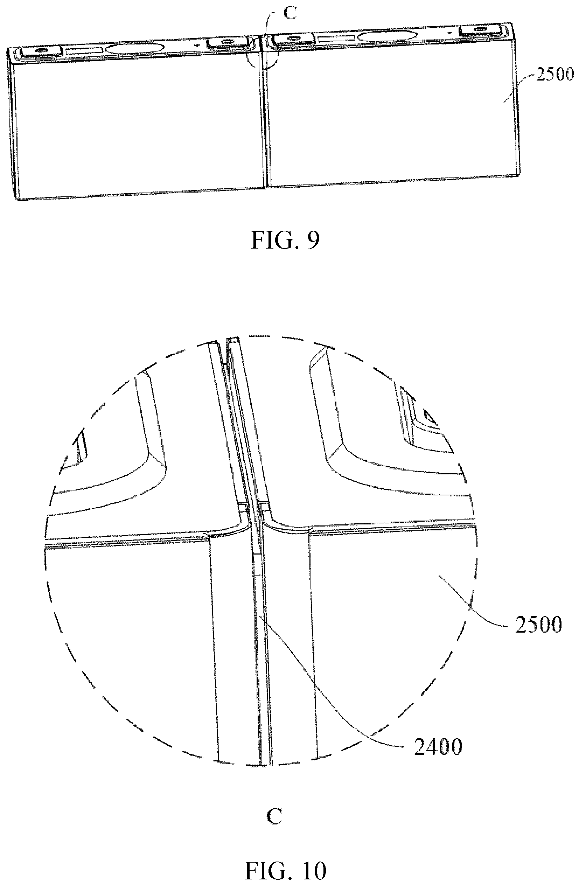

In some embodiments, referring to FIG. 9 and FIG. 10, FIG. 9 is a schematic structural diagram of two adjacent battery cells in FIG. 8, and FIG. 10 is a schematic structural diagram of portion C of FIG. 9. The battery pack 2000 further includes a heat insulating subassembly. The heat insulating subassembly includes a plurality of heat insulating components2400. Each of the heat insulating components 2400 is located between two of the plurality of the battery cells 2500 adjacent in the length direction of the cooling side plate 1200. The thickness of one of the heat insulating components 2400 is ranged from 0.1mm to 2mm, and thermal conductivity of the heat insulating components 2400 is ranged from 0.05W/(m·K) to 1W/(m·K).

Specifically, since the battery cells 2500 in the battery cell groups generate heat during charging and discharging, if the heat insulating components 2400 is not provided between two adjacent battery cells 2500 in the battery cell groups, it is easy to cause heat to accumulate in the battery cell groups, thereby increasing the risk of overheating of the battery cell group. In this embodiment, in the longitudinal direction of the cooling side plate 1200, the corresponding heat insulating member 2400 is provided between two adjacent battery cells 2500, which can effectively isolate the heat transfer between the adjacent battery cells 2500, reduce heat accumulation, and help to maintain the temperature stability of the battery pack 2000. The heat insulating components 2400 also act as an insulating material to prevent direct contact between the battery cells 2500 and reduce the risk of short circuiting of the battery cells 2500. In addition, the heat insulating components 2400 usually has certain flexibility and viscosity, and can fix the position of the battery cells 2500 to a certain extent, so as to prevent the battery cells 2500 from moving or dislocating under the action of external forces such as vibration or collision.

The thickness and the thermal conductivity of the heat insulating components 2400 are related to a specific material. For example, when a material of the heat insulating components 2400 is aerogel, the thermal conductivity thereof is 0.05 W/(m K) and the thickness thereof is 0.1 mm. When a material of the heat insulating components 2400 is silicone foam, the thermal conductivity thereof is 0.06 W/(m K) and the thickness thereof is 0.12 mm. When a material of the heat insulating components 2400 is mica, the thermal conductivity thereof is 0.35 W/(m K), and the thickness thereof is 0.7 mm. It is easy to understand that the thickness and/or thermal conductivity of the above materials may be different under different conditions, and the above examples are only for better explaining the embodiments of the present application.

In some embodiments, the heat insulating components 2400 may be a heat insulating silicone gel made of silicone rubber with excellent heat insulating properties. Because the heat insulation silica gel has good heat insulation properties, it can effectively block the conduction of heat and reduce the propagation speed of heat between adjacent battery cells 2500, thereby playing a heat insulation role. At the same time, heat-insulating silicone also has higher high-temperature resistance than ordinary rubber, can work stably in high-temperature environments for a long time, and is not easy to deform, age or fail. In addition, heat-insulating silica gel also has certain softness and elasticity and good electrical insulation properties, which makes it adapt to materials of different shapes and surfaces, improve its coverage and sealing properties, effectively isolate current, and improve the safety of battery pack 2000.

The battery pack 2000 provided by the embodiment of the present application can realize multi-faceted heat dissipation of the plurality of the battery cells 2500 through the plurality of the cooling components 1000, and at the same time provide buffer for the expansion of the battery cells 2500 through the buffer cavity 1112 on the cooling side plate 1200 to ensure the structural stability of the battery cells 2500.

The embodiments of the present application have been described in detail above, and the principles and embodiments of the present application have been described herein by applying specific examples, and the description of the above embodiments is only for helping to understand the methods and core ideas of the present application. The scope of the invention is defined by the appended claims.

## Claims

1. A cooling component (1000) for cooling battery cells (2500), comprising:
a cooling bottom plate (1100) for supporting bottoms of the battery cells (2500); and
a cooling side plate (1200) bendingly connected to one side of the cooling bottom plate (1100); wherein the cooling side plate (1200) abuts on and is thermally conductively connected to one side of the whole of the battery cells (2500);
**characterized in that**
the cooling side plate (1200) comprises a flow channel part and a buffered part, the flow channel part is provided with one or more cooling flow channels (1111), each of the cooling flow channels (1111) is used to circulate cooling medium, the buffered part is provided with a buffer cavity (1112), and the buffer cavity (1112) extends along a length direction of the cooling side plate (1200).

2. The cooling component (1000) according to claim 1, wherein the buffer cavity (1112) is located on one side of the plurality of the cooling flow channels (1111), and a distance between two adjacent cooling flow channels (1111) is less than the distance between the buffer cavity (1112) and the cooling flow channels (1111) close to the buffer cavity (1112).

3. The cooling component (1000) according to claim 2, wherein the buffer cavity (1112) is located on one side of the plurality of the cooling flow channels (1111) close to the cooling bottom plate (1100).

4. The cooling component (1000) according to claim 1, wherein a size of the buffer cavity (1112) is the same as a size of each of the cooling channels.

5. The cooling component (1000) according to any one of claims 1 to 4, wherein the thickness of the cooling side plate (1200) ranges from 3 mm to 8 mm, a width of the cooling flow channel ranges from 1.5 mm to 7 mm, and a width of the buffer cavity (1112) ranges from 1.5 mm to 7 mm.

6. The cooling component (1000) according to claim 5, wherein the thickness of the cooling bottom plate (1100) is less than or equal to the thickness of the cooling side plate (1200), and the thickness of the cooling bottom plate (1100) ranges from 2 mm to 8 mm.

7. wherein at least one of the cooling flow channels extends in a longitudinal direction of the cooling side plate.

8. The cooling component (1000) according to any one of claims 1 to 4, further comprising two current collectors (1300), wherein the two current collectors (1300) are installed on two ends of the flow channel part, and the two ends of the flow channel part extend beyond both ends of the buffered part in the length direction of the cooling side plate to make a current collecting cavity (1310) of each of the current collectors (1300) to be connected to the plurality of the cooling flow channels (1111).

9. A battery pack (2000), comprising a plurality of battery cells (2500) according to any one of claims 1 to 8 and a plurality of cooling components (1000) according to any one of claims 1 to 8.

10. The battery pack (2000) according to claim 9, wherein the plurality of the cooling components (1000) are disposed adj acent to each other, and one of the plurality of the battery cells (2500) is thermally conductively connected to the cooling bottom plate (1100) and the cooling side plate (1200) of the corresponding cooling component (1000), and is thermally conductively connected to the cooling side plate (1200) of another cooling component (1000) adjacent to the battery cells (2500).

11. The battery pack (2000) according to claim 9, further comprising a heat insulating subassembly (2300), wherein the heat insulating subassembly (2300) comprises a plurality of heat insulating components, each of the heat insulating components is located between two of the plurality of the battery cells (2500) adjacent in a length direction of the cooling side plate (1200), the thickness of one of the heat insulating components is ranged from 0.1mm to 2mm, and thermal conductivity of the heat insulating components is ranged from 0.05W/(m·K) to 1W/(m·K).

12. The battery pack (2000) of claim 9, further comprising a plurality of cooling plate (2200)s, wherein each of the plurality of cooling plate (2200)s is thermally conductively connected to a corresponding one of the plurality of the battery cells (2500) and is located on a side of the battery cell away from the cooling side plate (1200) of a corresponding one of the plurality of the cooling components (1000).

13. The battery pack (2000) of claim 9, wherein two ends of one of the plurality of the cooling plates (2200) are connected to two current collectors (1300), respectively.

14. The battery pack (2000) of claim 9, further comprising a fixing component (2300) located at a bottom of the plurality of the cooling components (1000) and configured to fix the plurality of the cooling components (1000);
wherein both ends of the fixing component (2300) protrude from both ends of the cooling bottom plate (1100) in the longitudinal direction of the cooling bottom plate (1100).

15. The battery pack (2000) of claim 9, further comprising a plurality of pipeline components (2100), wherein each of the plurality of the pipeline components (2100) is connected to a plurality of the cooling flow channels (1111) corresponding to the flow collector through one of the flow collectors of the plurality of the cooling components (1000).

## Patentansprüche

1. Kühlkomponente (1000) zum Kühlen von Batteriezellen (2500), umfassend:
eine Kühlbodenplatte (1100) zum Abstützen der Böden der Batteriezellen (2500); und
eine Kühlseitenplatte (1200), die biegend mit einer Seite der Kühlbodenplatte (1100) verbunden ist; wobei die Kühlseitenplatte (1200) an einer Seite der Gesamtheit der Batteriezellen (2500) anliegt und mit dieser wärmeleitend verbunden ist;
**dadurch gekennzeichnet, dass**
die Kühlseitenplatte (1200) einen Strömungskanalabschnitt und einen Pufferabschnitt umfasst, der Strömungskanalabschnitt mit einem oder mehreren Kühlströmungskanälen (1111) versehen ist, jeder der Kühlströmungskanäle (1111) zur Zirkulation von Kühlmedium dient, der Pufferabschnitt mit einem Pufferhohlraum (1112) versehen ist, und sich der Pufferhohlraum (1112) entlang der Längsrichtung der Kühlseitenplatte (1200) erstreckt.

2. Die Kühlkomponente (1000) nach Anspruch 1, wobei sich der Pufferhohlraum (1112) auf einer Seite der mehreren Kühlströmungskanäle (1111) befindet und ein Abstand zwischen zwei benachbarten Kühlströmungskanälen (1111) kleiner als der Abstand zwischen dem Pufferhohlraum (1112) und den dem Pufferhohlraum (1112) benachbarten Kühlströmungskanälen ist.

3. Die Kühlkomponente (1000) nach Anspruch 2, wobei sich der Pufferhohlraum (1112) auf einer Seite der Vielzahl von Kühlströmungskanälen (1111) in der Nähe der Kühlbodenplatte (1100) befindet.

4. Kühlkomponente (1000) nach Anspruch 1, wobei die Größe des Pufferhohlraums (1112) der Größe jedes der Kühlströmungskanäle entspricht.

5. Die Kühlkomponente (1000) nach einem der Ansprüche 1 bis 4, wobei die Dicke der Kühlseitenplatte (1200) im Bereich von 3 mm bis 8 mm liegt, die Breite des Kühlströmungskanals im Bereich von 1,5 mm bis 7 mm liegt und die Breite des Pufferhohlraums (1112) im Bereich von 1,5 mm bis 7 mm liegt.

6. Die Kühlkomponente (1000) gemäß Anspruch 5, wobei die Dicke der Kühlbodenplatte (1100) kleiner oder gleich der Dicke der Kühlseitenplatte (1200) ist und die Dicke der Kühlbodenplatte (1100) im Bereich von 2 mm bis 8 mm liegt.

7. wobei sich mindestens einer der Kühlströmungskanäle in der Längsrichtung der Kühlseitenplatte erstreckt.

8. Die Kühlkomponente (1000) gemäß einem der Ansprüche 1 bis 4, ferner umfassend zwei Stromabnehmer (1300), wobei die beiden Stromabnehmer (1300) an zwei Enden des Strömungskanalabschnitts angebracht sind und sich die beiden Enden des Strömungskanalabschnitts in Längsrichtung der Kühlseitenplatte über beide Enden des Pufferabschnitts hinaus erstrecken, um einen Stromabnehmerhohlraum (1310) für jeden der Stromabnehmer (1300) zu bilden, der mit der Vielzahl der Kühlströmungskanäle (1111) verbunden ist.

9. Das Batteriepack (2000), umfassend eine Vielzahl von Batteriezellen (2500) und eine Vielzahl von Kühlkomponenten (1000) gemäß einem der Ansprüche 1 bis 8.

10. Der Batteriepack (2000) nach Anspruch 9, wobei die Vielzahl der Kühlkomponenten (1000) nebeneinander angeordnet ist und eine der Vielzahl der Batteriezellen (2500) wärmeleitend mit der Kühlbodenplatte (1100) und der Kühlseitenplatte (1200) der entsprechenden Kühlkomponente (1000) verbunden ist und wärmeleitend mit der Kühlseitenplatte (1200) einer anderen, an die Batteriezellen (2500) angrenzenden Kühlkomponente (1000) verbunden ist.

11. Der Batteriepack (2000) nach Anspruch 9, der ferner eine wärmeisolierende Unterbaugruppe (2300) umfasst, wobei die wärmeisolierende Unterbaugruppe (2300) eine Vielzahl von wärmeisolierenden Komponenten umfasst, wobei sich jede der wärmeisolierenden Komponenten zwischen zwei der Vielzahl von Batteriezellen (2500) befindet, die in Längsrichtung der Kühlseitenplatte (1200) angeordnet ist, die Dicke einer der wärmeisolierenden Komponenten im Bereich von 0,1 mm bis 2 mm liegt und die Wärmeleitfähigkeit der wärmeisolierenden Komponenten im Bereich von 0,05 W/(m·K) bis 1 W/(m·K) liegt.

12. Der Batteriepack (2000) nach Anspruch 9, der ferner eine Vielzahl von Kühlplatten (2200) umfasst, wobei jede der Vielzahl von Kühlplatten (2200) thermisch leitend mit einer entsprechenden der Vielzahl von Batteriezellen (2500) verbunden ist und sich auf einer Seite der Batteriezelle befindet, die von der Kühlseitenplatte (1200) einer entsprechenden der mehreren Kühlkomponenten (1000) angeordnet ist.

13. Der Batteriepack (2000) nach Anspruch 9, wobei zwei Enden einer der mehreren Kühlplatten (2200) jeweils mit zwei Stromabnehmern (1300) verbunden sind.

14. Der Batteriepack (2000) nach Anspruch 9, der ferner eine Befestigungskomponente (2300) umfasst, die an einer Unterseite der Vielzahl der Kühlkomponenten (1000) angeordnet und so konfiguriert ist, dass sie die Vielzahl der Kühlkomponenten (1000) befestigt; wobei beide Enden der Befestigungskomponente (2300) in Längsrichtung der Kühlbodenplatte (1100) aus beiden Enden der Kühlbodenplatte (1100) herausragen.

15. Der Batteriepack (2000) nach Anspruch 9, der ferner eine Vielzahl von Rohrleitungskomponenten (2100) umfasst, wobei jede der Vielzahl der Rohrleitungskomponenten (2100) über einen der Strömungssammler der Vielzahl der Kühlkomponenten (1000) mit einer Vielzahl von Kühlströmungskanälen (1111) verbunden ist, die dem Strömungssammler entsprechen.

## Revendications

1. Composant de refroidissement (1000) destiné à refroidir des cellules de batterie (2500), comprenant :
une plaque de fond de refroidissement (1100) destinée à supporter les fonds des cellules de batterie (2500) ; et
une plaque latérale de refroidissement (1200) reliée de manière articulée à un côté de la plaque de fond de refroidissement (1100) ; dans lequel la plaque latérale de refroidissement (1200) vient en butée contre un côté de l'ensemble des cellules de batterie (2500) et lui est reliée thermoconductrice ;
**caractérisé en ce que**
la plaque latérale de refroidissement (1200) comprend une partie formant canal d'écoulement et une partie tampon, la partie formant canal d'écoulement est pourvue d'un ou plusieurs canaux de refroidissement (1111), chacun des canaux de refroidissement (1111) est utilisé pour faire circuler un fluide de refroidissement, la partie tampon est pourvue d'une cavité tampon (1112), et la cavité tampon (1112) s'étend dans la direction longitudinale de la plaque latérale de refroidissement (1200).

2. Le composant de refroidissement (1000) selon la revendication 1, dans lequel la cavité tampon (1112) est située d'un côté de la pluralité de canaux de refroidissement (1111), et la distance entre deux canaux de refroidissement adjacents (1111) est inférieure à la distance entre la cavité tampon (1112) et les canaux de refroidissement (1111) proches de la cavité tampon (1112).

3. Composant de refroidissement (1000) selon la revendication 2, dans lequel la cavité tampon (1112) est située d'un côté de la pluralité de canaux de refroidissement (1111) proches de la plaque de fond de refroidissement (1100).

4. Composant de refroidissement (1000) selon la revendication 1, dans lequel la taille de la cavité tampon (1112) est identique à celle de chacun des canaux de refroidissement.

5. Composant de refroidissement (1000) selon l'une quelconque des revendications 1 à 4, dans lequel l'épaisseur de la plaque latérale de refroidissement (1200) est comprise entre 3 mm et 8 mm, la largeur du canal de refroidissement est comprise entre 1,5 mm et 7 mm, et la largeur de la cavité tampon (1112) est comprise entre 1,5 mm et 7 mm.

6. Le composant de refroidissement (1000) selon la revendication 5, dans lequel l'épaisseur de la plaque de fond de refroidissement (1100) est inférieure ou égale à l'épaisseur de la plaque latérale de refroidissement (1200), et l'épaisseur de la plaque de fond de refroidissement (1100) est comprise entre 2 mm et 8 mm.

7. dans lequel au moins l'un des canaux de refroidissement s'étend dans la direction longitudinale de la plaque latérale de refroidissement.

8. Composant de refroidissement (1000) selon l'une quelconque des revendications 1 à 4, comprenant en outre deux collecteurs de courant (1300), dans lequel les deux collecteurs de courant (1300) sont installés aux deux extrémités de la partie formant canal d'écoulement, et les deux extrémités de la partie formant canal d'écoulement s'étendent au-delà des deux extrémités de la partie tampon dans la direction longitudinale de la plaque latérale de refroidissement afin de former une cavité de collecteur de courant (1310) de chacun des collecteurs de courant (1300) destinée à être reliée à la pluralité de canaux de refroidissement (1111).

9. Le bloc-batterie (2000), comprenant une pluralité de cellules de batterie (2500) et une pluralité de composants de refroidissement (1000) selon l'une quelconque des revendications 1 à 8.

10. Le bloc-batterie (2000) selon la revendication 9, dans lequel la pluralité de composants de refroidissement (1000) est disposée de manière adjacente les uns aux autres, et l'une de la pluralité de cellules de batterie (2500) est reliée de manière thermiquement conductrice à la plaque de fond de refroidissement (1100) et à la plaque latérale de refroidissement (1200) du composant de refroidissement correspondant (1000), et est reliée de manière thermiquement conductrice à la plaque latérale de refroidissement (1200) d'un autre composant de refroidissement (1000) adjacent aux cellules de batterie (2500).

11. Le bloc-batterie (2000) selon la revendication 9, comprenant en outre un sous-ensemble d'isolation thermique (2300), dans lequel le sous-ensemble d'isolation thermique (2300) comprend une pluralité de composants d'isolation thermique, chacun des composants d'isolation thermique est situé entre deux des cellules de batterie (2500) de la pluralité adjacentes dans la direction longitudinale de la plaque latérale de refroidissement (1200), l'épaisseur de l'un des composants d'isolation thermique est comprise entre 0,1 mm et 2 mm, et la conductivité thermique des composants d'isolation thermique est comprise entre 0,05 W/(m·K) et 1 W/(m·K).

12. Le bloc-batterie (2000) selon la revendication 9, comprenant en outre une pluralité de plaques de refroidissement (2200), dans lequel chacune des plaques de refroidissement (2200) est reliée de manière thermiquement conductrice à l'une correspondante de la pluralité de cellules de batterie (2500) et est située sur un côté de la cellule de batterie opposé à la plaque latérale de refroidissement (1200) d'un composant de refroidissement (1000) correspondant parmi la pluralité de composants de refroidissement (1000).

13. Le bloc-batterie (2000) selon la revendication 9, dans lequel les deux extrémités de l'une des plaques de refroidissement (2200) sont reliées respectivement à deux collecteurs de courant (1300).

14. Le bloc-batterie (2000) selon la revendication 9, comprenant en outre un composant de fixation (2300) situé au fond de la pluralité de composants de refroidissement (1000) et configuré pour fixer la pluralité de composants de refroidissement (1000) ;
dans lequel les deux extrémités de l'élément de fixation (2300) font saillie des deux extrémités de la plaque de fond de refroidissement (1100) dans la direction longitudinale de la plaque de fond de refroidissement (1100).

15. Le bloc-batterie (2000) selon la revendication 9, comprenant en outre une pluralité de composants de canalisation (2100), dans lequel chacun des composants de canalisation (2100) de la pluralité est relié à une pluralité de canaux de refroidissement (1111) correspondant au collecteur d'écoulement par l'intermédiaire de l'un des collecteurs d'écoulement de la pluralité de composants de refroidissement (1000).
